# EUROPEAN PATENT SPECIFICATION

(11) **EP 1 044 597 B1**
(45) Date of publication and mention of the grant of the patent: **02.07.2003**
(21) Application number: 00200744.1
(22) Date of filing: 03.03.2000
(51) Int. Cl.: A01F 12/16

(54) **Stone impact detection and ejection for a feederhouse on a agricultural combine**
Detektion und Auswurf von Steinen für Schrägfördergehäuse eines Mähdreschers
Détection et éjection de pierres pour convoyeur d'une moissonneuse-batteuse

(30) Priority: 12.04.1999 US 128717 P
(43) Date of publication of application: 18.10.2000
(73) Proprietor: CNH Belgium N.V., 8210 Zedelgem (BE)
(72) Inventor: Digman, Michael J., Denver, PA 17517 (US); Heinsey, David N., Stevens, PA 17578 (US); Bennet, James A., Narvon, PA 17555 (US); Vandergucht, Yvan C.C, 8647 Lo-Reninge (BE)
(74) Representative: Vandenbroucke, Alberic

(56) References cited:
- EP-A- 0 037 147
- EP-A- 0 073 269
- DE-A- 3 135 992
- GB-A- 2 072 475
- GB-A- 2 082 435
- US-A- 4 467 819

## Description

This invention relates to the improvement of a feederhouse on an agricultural combine. More specifically, the invention allows for improved detection and ejection of a stone from the feederhouse.

Mechanical harvesting of grain has taken place for decades. However, efforts continue in the attempt to make harvesting operations more efficient and effective. A combine harvester of the type disclosed by US-A-4,846,198 generally includes a header, which cuts the crop. The header then moves the cut crop into a feederhouse. The feederhouse lifts the cut crop into the threshing and separation areas of the combine. The grain is separated from the stalk by a rotor of the threshing system. The grain is then moved and stored in a grain tank. The chaff and trash are deposited from the rear of the combine.

Commonly, combine harvesters are provided with stone traps for the removal of stones from the crop flow before they can enter the threshing area of the combine. Such stone traps may be provided at the end of the feederhouse, immediately before the threshing drum, or below the feederhouse itself, as shown in US-A-3,971,390. The latter type usually comprises a trap door which is opened upon detection of a foreign object. The door may be actuated mechanically or electronically or by a combination of both, as described in US-A-4,305,244.

Frequently, during farming operations, the header will inadvertently receive a stone. If the stone enters the threshing system in the combine harvester, expensive damage will result to the threshing components. It is a critical function of the stone detection and removal system to prevent a stone from damaging the threshing system. A typical stone detection and removal system of the mechanical type involves a cylindrical stone beater or stone roll positioned near the mid-point of the feederhouse. The stone roll rotates allowing the crop mat to continue towards the rear drum and threshing system. A stone that is too large, is forced from the feederhouse through a stone trap door beneath the stone roll.

Unfortunately the stone beater design limits the thickness of the crop flow. By limiting the amount of crop flow, it takes longer to perform farming operations.

Also electronic instruments have been used to detect stones entering farm equipment. Typically, the stone contacts a sounding plate, such as the detector plate shown in US-A-4,707,972. The electronic instrument monitors the sounding plate. A stone contacting the sounding plate causes the sounding plate to emit vibrations or a sound above a pre-determined setting. The sensor observes this effect and halts the farming operation.

It has been difficult to apply this technique of stone detection to a combine harvester to a satisfactory degree. It is not uncommon that more than twenty percent of the incoming stones pass undetected and reach the threshing system, causing premature wear of the drum and concaves.

There are also additional problems with the feederhouse design. When the trap door is opened, the crop portion containing the foreign object is expected to leave the feederhouse by gravity. However the tangling grain stems may constitute a crop mat which is not readily penetrated by the stone, such that the latter remains trapped therein and reaches the threshing drum after all.

An invention that could resolve these issues would represent an improvement to the art.

According to one aspect of the present invention there is provided a agricultural harvesting machine, comprising:
a wheeled main frame;
a crop processing system mounted to said main frame for processing crop material harvested by said machine; and
a feederhouse mounted to said main frame for feeding said crop material to said crop processing system;
said feederhouse comprising:
   - a conveyor means for conveying said crop material along a predetermined path to said crop processing system; and
   - a detector arrangement for detecting foreign objects in said crop material, said arrangement including a first impact sensing array, adjacent said predetermined path and operable to detect impacts by said foreign objects;
characterized in that said detector arrangement further comprises a second impact sensing array remote from said first impact sensing array and adjacent said predetermined path, and operable to detect impacts by said foreign objects.

This arrangement significantly enhances the efficiency of the detector system and reduces the number of stones passing undetected through the conveyor.

Advantageously, the first sensing array is positioned beneath the flow path and the second sensing array above this path. For example, where the conveyor means comprise a conveyor chain, the first array may be positioned below the lower apron of the chain and the second array in a mounting zone between the upper and lower apron of the chain.

Where the conveyor means comprise a movable front drum, mounted on one or two pivotable drum arms, the second array may be attached to said drum arm. In this manner the sensing array follows the top layer of the incoming crop flow. To preclude stray signals following from contact of the sensing array with the conveyor, the drum arm may be provided with a roller contacting this chain well before the sensing array does.

This sensing array may comprise a channel, possibly mounted between the drum arms, provided with an insulation and at least one impact sensor. For wide feederhouses it may be of interest to use a plurality of impact sensors combined into the array. This arrangement also improves the reliability of the system as a further sensor may sense the impact which is missed by a failing or broken first sensor.

The sensing array below the crop path may comprise a sounding plate aligned with the feederhouse floor and a insulation applied to the sounding plate. The front of the sounding plate may be held in a 'U' channel insulation of a plate support.

The sensor may be of the type detecting mechanical vibrations or sounds and is connected to a controller discerning between background noise and stone impacts.

According to another aspect of the present invention there is provided an agricultural harvesting machine comprising:
a wheeled main frame;
a crop processing system mounted to said main frame for processing crop material harvested by said machine; and
a feederhouse mounted to said main frame for feeding said crop material to said crop processing system;
said feederhouse comprising:
   - a conveyor means for conveying said crop material along a predetermined path to said crop processing system;
   - a detector arrangement for detecting foreign objects in said crop material, said arrangement including an impact sensing array, adjacent said predetermined path and operable to detect impacts by said foreign objects;
   - an aperture in said feederhouse below said predetermined crop path; and
   - a door pivotally attached to said feederhouse and covering said aperture, said door being capable of rotating so as to uncover said aperture and to discharge said foreign objects from said feederhouse;
characterized in that said feederhouse further comprises:
a sled pivotally mounted above said aperture and above said predetermined path; and
linkage means connecting said door and said sled for pivoting said sled in the direction of said aperture as said door is rotated to uncover said aperture.

The movement of the sled deviates the crop flow and assists in discharging the portion of the crop containing the foreign object from the feederhouse, well before it can reach the crop processing system.

The sled may be mounted above the lower apron of a chain conveyor and contact this apron when pivoted by the linkage means.

An embodiment of the present invention will now be describer in greater detail, with reference to the accompanying drawings, wherein:
Figure 1 is an over-all side elevation of a combine harvester equipped with a feederhouse and a header;
Figure 2 is an enlarged side elevation of the feederhouse of Figure 1, showing a first and a second acoustic array and stone a trap door;
Figure 2A is an enlarged sectional view of the feederhouse, taken along line 2A-2A of Figure 2;
Figure 3 is an enlarged side elevation of the feederhouse of Figure 2, showing the rotational movement of the stone trap door;
Figure 4 is an enlarged side elevation of the feederhouse of Figure 2, showing the rotational movement of the feederhouse where a door cable pulls the stone trap door closed;
Figure 5 is a cut-away, close-up view of the first and second acoustic arrays of Figure 2;
Figure 6 is a cut-away, close-up view of the first and second acoustic arrays showing a crop flow with stones passing through the feederhouse; and
Figure 7 is a schematic illustrating the controller and wires from the impact sensors and to the solenoid of the stone trap door.

Left and right references are used as a matter of convenience and are determined by standing at the rear of the combine harvester and facing the forward end in the normal direction of travel. Likewise, forward and rearward are determined by normal direction of travel of the combine harvester. Upward or downward orientations are relative to the ground or operating surface. Horizontal or vertical planes are also relative to ground.

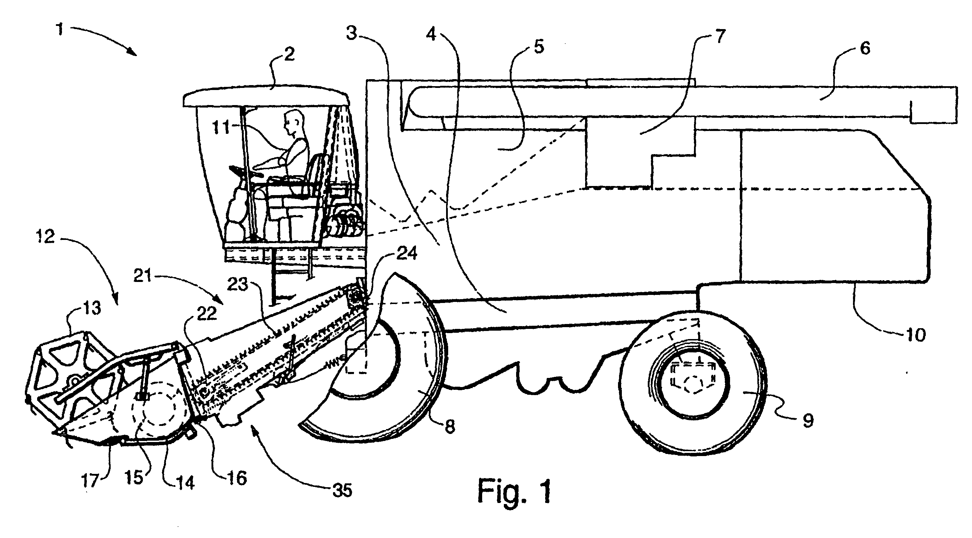

Figure 1 shows a typical combine harvester 1 having a pair of front wheels 8 (only one shown) and a pair of rear wheels 9 (only one shown) for providing movement over the ground. At the front of the combine harvester is a header 12 provided with a sickle bar 17 for cutting a crop. As the combine harvester 1 is moved forward, the sickle bar 17 cuts the grain and stalk. A reel 13 positioned above the sickle bar 17 moves the grain into an auger trough 14. A transverse auger 15 pushes the grain and stalk in the auger trough 14 to the center of the header. The header 12 illustrated in Figure 1 is a wheat or similar small grain header. The header 12 may be positioned and re-positioned relative to the ground, i.e. the header 12 may be positioned relatively high or low to the ground and/or may be tilted to the left or right. These features are constantly being adjusted depending on the terrain and crop conditions. The header reel 13 may also be positioned relative to the header 12. The optimum position and rotation of the header reel 13 again depends on the terrain and crop conditions.

Located at the center of the header is the elevator or feederhouse 21. The feederhouse 21 moves the grain and stalks rearward into the threshing and separation system 3 and cleaning system 4 of the combine harvester 1. After threshing and cleaning, the processed grain is stored in a grain tank 5 located near the top of the combine harvester 1. The grain is removed from the grain tank 5 by an unloading auger (not shown) through the grain tank unload tube 6 and is received into a receptable of a separate vehicle such as a truck or tractor-pulled grain cart, which follows the combine harvester. The processed grain may be discharged while the combine harvester and separate vehicles are moving. The trash or chaff is ejected from the rear of the combine harvester by a chaff spreader 10.

The operator 11 controls the combine harvester 1 from the cab 2 located behind the header 12 and at the front of the combine harvester. From the cab the operator can monitor most of the various combine functions. The cab 2 usually has a large glass window or several windows which afford the operator 11 the maximum ability to observe the header 12. The combine harvester 1 and various systems are powered by an engine 7 positioned generally behind the grain tank 5.

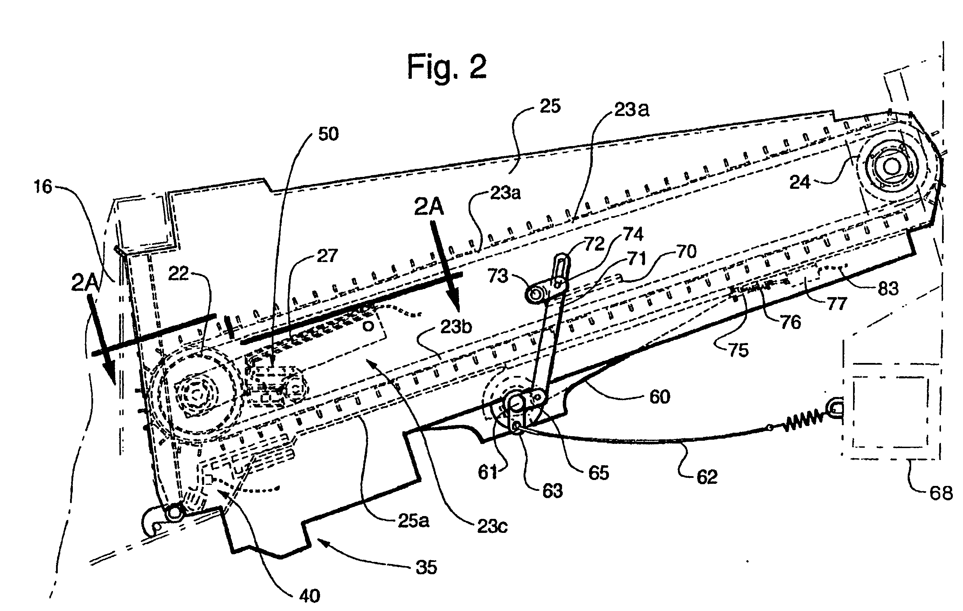

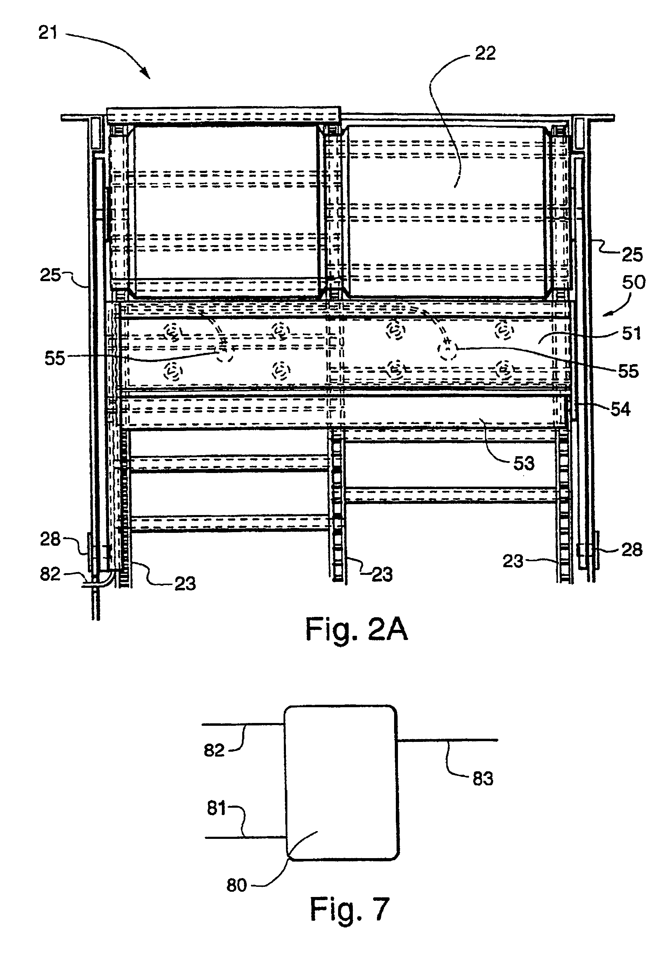

The feederhouse 21 can be generally observed in Figure 1 and more specifically in Figures 2 through 7. The feederhouse comprises a conveyor chain 23 extending around a front drum 22 near the mouth of the feederhouse 21 and a rear drum 24 adjacent the inlet of the threshing and separation system 3 of the harvester 1. The conveyor chain has an upper apron 23a and a lower apron 23b. The latter engages the incoming crop material to convey it along a predetermined path to the threshing and separation system 3.

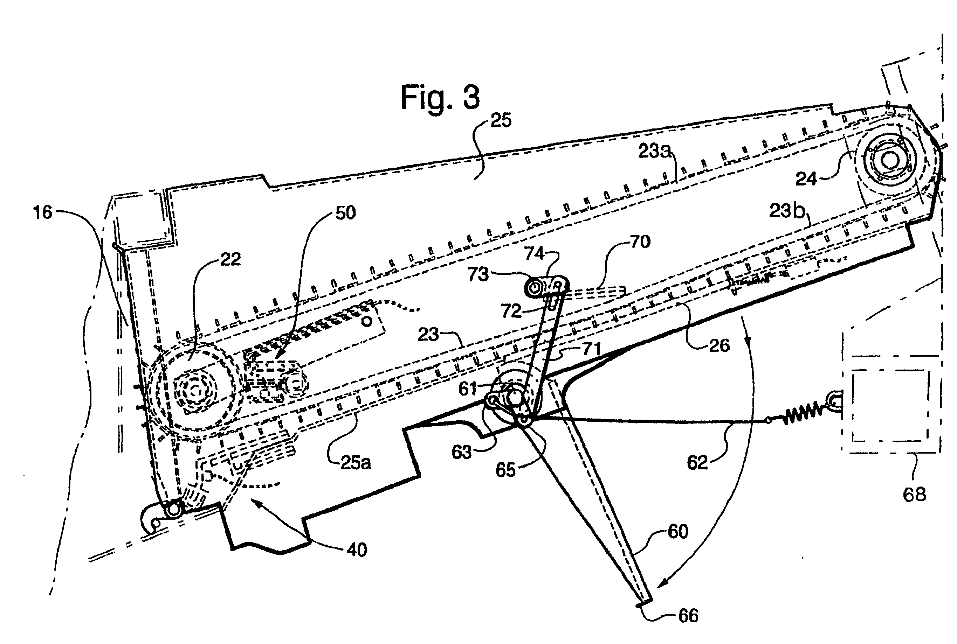

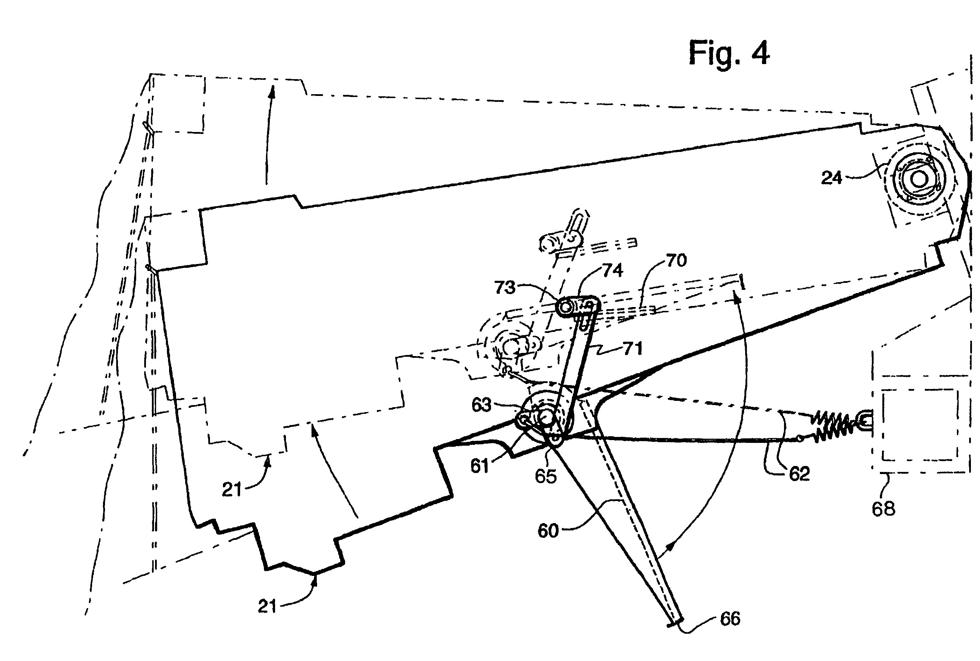

A stone impact detector arrangement 35 for a combine harvester feederhouse 21 may be observed in Figures 2 through 7. As seen in Figure 2, there are a first impact sensing array 40 and a second impact sensing array 50 located proximate to the front drum 22 of the feederhouse 21. These sensing arrays 40 and 50 are operable to transmit a signal that triggers a solenoid 77 below the floor 25a of the feederhouse 21. The solenoid 77 opens a latch 75 allowing a stone trap door 60 to fall open (see Figures 3 and 4). This allows a stone 30 in the crop flow to drop out of the feederhouse 21. The operator then raises the feederhouse 21 (as shown in Figure 4), to make a door cable 62 pull the stone trap door 60 into contact with the latch 75.

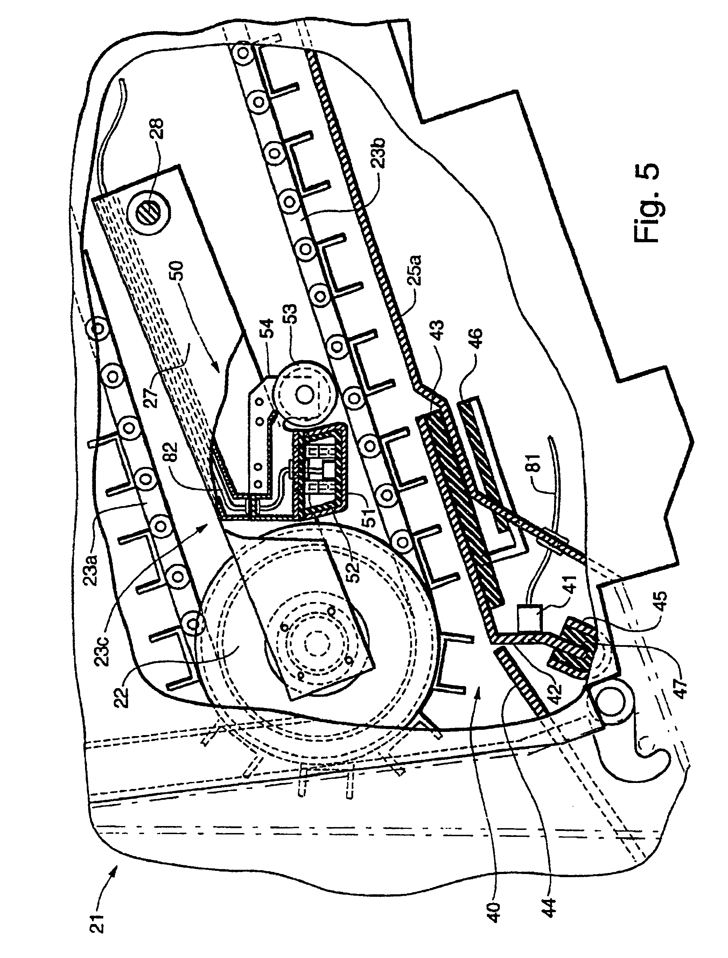

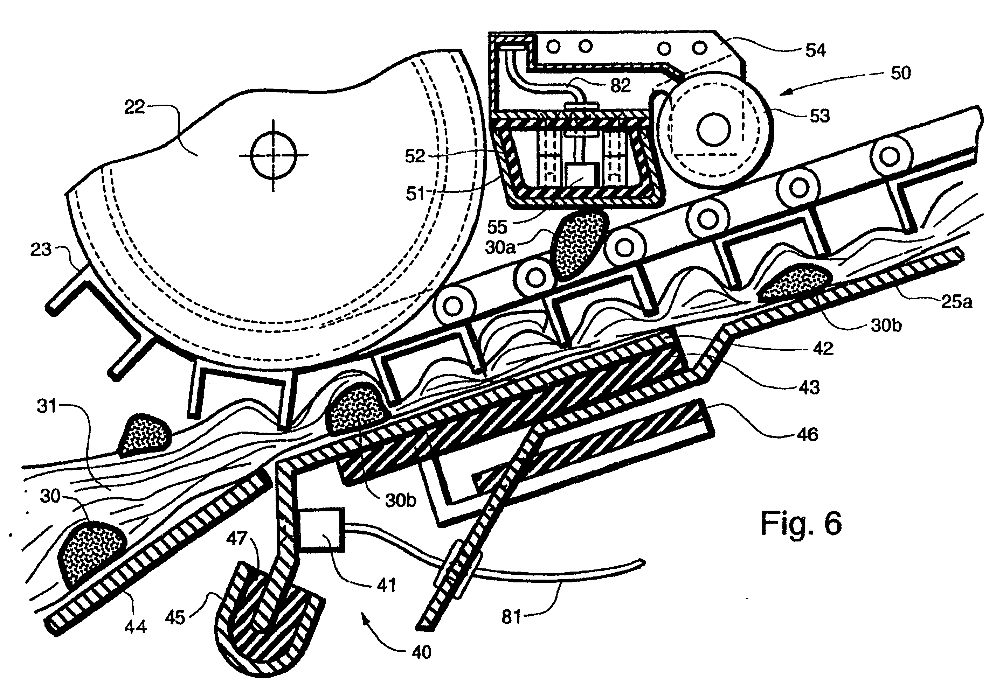

The first impact sensing array 40 is located beneath the front drum 22 as seen in Figures 5 and 6. It consists of a first impact sensor 41 monitoring the first sounding plate 42. In the preferred embodiment, the first impact sensor 41 is a vibration sensor of the type manufactured by Bosch™ and having reference number 261231007. The impact sensor 41 could also be another vibration sensor, an accelerometer or an acoustic sensor such as a microphone or a similar listening device. The impact sensor 41 is affixed to a first sounding plate 42, which extends roughly parallel to the feederhouse floor 25a. The first sounding plate 42 is positioned beneath the front drum 22 and behind an entry plate 44 extending from the header 12.

To prevent the sounding plate 42 from detecting stray vibrations or sounds, the plate is insulated from the remainder of the feederhouse 21. Between the first sounding plate 42 and the feederhouse floor 25a is a first insulated plate 43. Beneath the feederhouse floor 25a is a second insulated plate 46. The sounding plate 42 is contoured to partially project beneath the entry plate 44 to further minimize the sensing of stray noise by the sensor 41. A 'U' channel 45 supports this contoured portion of the first sounding plate 42. Again, the 'U' channel is provided with 'U' channel insulation 47 so as to minimize the transfer of stray noise.

The first impact sensor 42 transmits a first sensor signal through the first sensor wire 81. A stone 30 impacting the first sounding plate 42 is detected by the first impact sensor 41 which sends a first signal through the first sensor wire 81. While Figure 5 details only one sensor 41, it should be understood that a series of sensors might be affixed onto the first sounding plate 42 beneath the front drum 22 and the entry plate 44.

The second impact sensing array 50 is positioned in a mounting zone 23c which is defined as the region between the upper apron 23a and lower apron 23b of the conveyor chain 23 and behind the front drum 22. As viewed in Figures 5 and 6, the second impact sensing array is positioned very close to the front drum 22. It has a second impact sensor 55 attached to a sounding plate or a channel 51. The second impact sensor 55 is identical to the first impact sensor 41 and is a Bosch™ vibration sensor model number 261231007. It is important that the second impact sensing array 50 be positioned between the upper apron 23a and lower apron 23b and as close to the front drum 22 as possible. In the preferred embodiment, the second impact sensor is positioned 195.5 mm behind the center of the front drum 22. It is also important that the second sounding plate or channel 51 do not contact the front drum 22 or conveyor chain 23. To avoid the transmission of stray noises by the channel 51, the latter is provided with a channel insulation 52.

As seen in Figures 2A and 5, the channel 51 is affixed on a pair of drum arms 27. The drum arms 27 are pivotally attached to the sidewalls 25 of the feederhouse 21 at the drum arm pivots 28. The front drum 22 is rotationally attached at the opposite end of each drum arm 27. As previously mentioned, in order to prevent the channel 51 from receiving stray noise, it is important that the lower apron 23b do not contact the channel 51. Therefore, a roller 53 attached by a roller support 54 to the channel 51 is utilized to keep the lower apron 23b from touching the channel 51. The second impact sensor 55 transmits a second sensor signal through a second sensor wire 82. As illustrated by Figure 6, a stone 30 impacting the channel 51 is detected by the second impact sensor 55 which sends a second signal through the second sensor wire 82. As detailed in Figure 2A, a series of sensors may be affixed onto the channel 51.

Figure 6 illustrates a crop flow 31 containing several stones 30. Stones 30b at the bottom of the crop flow 31 impact the first sounding plate 42 and that impact is detected by the first impact sensor 41. Stones 30a at the top of the crop flow 31 impact the second sounding plate or channel 51 and that impact is detected by the second impact sensor 55. A single impact sensing array located beneath the front drum and lacking the modified sounding plate 42 only detected 40-50 percent of stones 30 entering the feederhouse. However, the addition of the second acoustic array 50 and modified first sounding plate 42 has resulted in a 92-96 percent detection of the stones entering the feederhouse.

The stone trap door 60 is pivotally attached to the feederhouse floor 25a by a hinge 61. When the door 60 is closed (as seen in Figure 2), it seals a floor aperture 26 in the feederhouse floor 25a. When the door 60 rotates downwards (as seen in Figure 3), the floor aperture 26 is opened and crop material can drop to the ground. Affixed to the hinge 61 is a cable link 63 and a sled link 65. The door cable 62 is connected to the cable link 63. Pivotally attached to the sled link 65 is a sled linkage 71. Located between the upper apron 23a and lower apron 23b is the stone ejection sled 70. The ejection sled 70 is pivotally attached to the sidewall 25 by a sled hinge 73. Affixed to the sled hinge 73 is the sled hinge link 74. The opposite end of the sled hinge link 74 is slideably attached to the sled linkage 71 through a linkage slot 72 in the top end of said sled linkage 71.

A controller 80 is receiving the first sensor signal through the first sensor wire 81 and the second sensor signal through the second sensor wire 82. In response thereto the controller 80 transmits a solenoid signal through a solenoid wire 83 to the solenoid 77. The controller 80 may be a dedicated microprocessor-based controller or may incorporated in a controller monitoring various function of the combine harvester 1.

The solenoid 77 is a push-type solenoid having a movable member which extends outwardly from the solenoid coil. The solenoid 77 receives the solenoid signal from the controller 81 through the solenoid wire 83. Upon receiving this signal the solenoid 77 retracts via a spring 76 the latch 75 holding the stone trap door 60 closed. As seen in Figure 3, after the latch is retracted, the stone trap door 60 rotates downward allowing a portion of the crop flow containing a stone to exit through the door aperture 26. At the same time, the sled link rotates clockwise (as viewed in Figure 3) pulling the sled linkage 71 and sled hinge link 74 downward. This rotates the sled hinge 74 and attached stone ejection sled 70 downwards. The sled 70 contacts the lower apron 23b and deflects it downwards. This helps to redirect the crop flow 31 containing a stone through the floor aperture 26. In the preferred embodiment, the stone trap door 60 rotates approximately 75 degrees and the stone ejection sled rotates approximately 25 degrees.

Figure 4 illustrates how the stone trap door 60 is closed over the floor aperture 26. While the door 60 is open, the feederhouse 21 is raised or rotated clockwise (as seen in Figure 4) about the rear drum 24. The door cable 62, which is attached to the cable link 63 and the combine frame 68, is tensioned and rotates the stone door 60 counter-clockwise. The spring-biased latch 75 is inserted through a latch catch 66 on the door 60. This ensures that the door remains closed, thus preventing any inadvertent crop loss.

The stone detection and ejection system operates as follows. A stone enters the header 12 and moves with the crop flow to the feederhouse 21. The crop flow 31 passes between the front drum 22 and feederhouse floor 25a. Stone 30b contacts the first sounding plate 42 or stone 30a contacts the channel or second sound plate 51. An impact sensor, either 41 or 55, detects the impact and transmits a sensor signal through the sensor wire 81 or 82 to the controller 80. The controller 80 transmits a solenoid signal through the solenoid wire 83 to the solenoid 77. The solenoid 77 retracts the latch 75 from the latch catch 66 on the stone trap door. The stone trap door swings open allowing the portion of the crop flow containing the stone to exit the feederhouse 21 through the floor aperture 26. The sled link 65 attached to the hinge 61 pulls the sled linkage 71 and sled hinge link 74 downwards to rotate the sled hinge 73. The ejection sled 70, which is affixed to the sled hinge 73, is rotated into contact with the lower apron 23b. The sled 70 deflects the lower apron 23b and helps eject additional crop flow containing any stones. After the stone 30 is ejected, the feederhouse 21 is raised. A door cable 62 pulls the stone trap door 60 closed. The latch 75 is re-inserted into the latch catch 66.

It will be obvious to those skilled in the art that various changes may be made without departing from the scope of the invention and the invention is not to be considered limited to what illustrated in the drawings and described in the specification. For instance, it may equally be used in other types of combine or forage harvesters.

## Claims

1. An agricultural harvesting machine (1), comprising:
a wheeled main frame (68);
a crop processing system (3, 4) mounted to said main frame for processing crop material harvested by said machine; and
a feederhouse (21) mounted to said main frame (68) for feeding said crop material to said crop processing system (3 ,4);
said feederhouse (21) comprising:
- a conveyor means (23) for conveying said crop material along a predetermined path (31) to said crop processing system (3, 4); and
- a detector arrangement (35) for detecting foreign objects (30) in said crop material, said arrangement (35) including a first impact sensing array (40), adjacent said predetermined path (31) and operable to detect impacts by said foreign objects;
**characterized in that** said detector arrangement further comprises a second impact sensing array (50) remote from said first impact sensing array (40) and adjacent said predetermined path (31), and operable to detect impacts by said foreign objects (30).

2. An agricultural harvesting machine according to claim 1, **characterized in that** said first sensing array (40) is positioned beneath said predetermined path (31) and said second sensing array (50) is positioned above said predetermined path.

3. An agricultural harvesting machine according to claim 1 or 2, **characterized in that**:
said conveyor means comprise a front drum (22) and a rear drum (24), rotatably attached to a wall or walls (25) of said feederhouse (21), and a conveyor chain (23) encircling said front drum (22) and said rear drum (24) and having an upper apron (23a) and a lower apron (23b); and
said second sensing array (50) is positioned in a mounting zone (23c) between said upper apron (23a) and said lower apron (23b).

4. An agricultural harvesting machine according to claim 3, **characterized in that**:
said front drum (24) is rotatably attached to said wall or walls (25) by means of a pivotable drum arm (27); and
said second sensing array (50) is attached to said pivotable drum arm (27).

5. An agricultural harvesting machine according to claim 4, **characterized in that** said pivotable drum arm (27) is provided with a roller (53) keeping said conveyor chain (23) from contacting said second sensing array (50).

6. An agricultural harvesting machine according to any of the preceding claims, **characterized in that** said second sensing array comprises a channel (51) adjacent said predetermined path (31), a channel insulation (52) applied to said channel (51) and at least one impact sensor (55).

7. An agricultural harvesting machine according to any of the preceding claims, **characterized in that**:
said predetermined path (31) extends along a floor (25a) of said feederhouse (21); and
said first sensing array comprises:
- a sounding plate (42) which is positioned in alignment with said floor (25a);
- an insulation (43) applied to said sounding plate (42) between said sounding plate and said floor;
- a plate support (45) attached to said feederhouse (21) for supporting said sounding plate (42), the support having a 'U' channel insulation (47); and
- at least one impact sensor (41).

8. An agricultural harvesting machine according to any of the preceding claims, **characterized in that** said first sensing array and/or said second sensing array comprise an impact sensor (41/55) operable to sense mechanical vibrations or sounds caused by the impact of said foreign objects (30).

9. An agricultural harvesting machine according to any of the preceding claims, **characterized in that** said feederhouse (21) has an ejection system for said foreign objects (30), said ejection system comprising:
an aperture (26) in said feederhouse (21) below said predetermined crop path (31);
a door (60) pivotally attached to said feederhouse (21) and covering said aperture (26), said door being capable of rotating so as to uncover said aperture (26) and to discharge said foreign objects from said feederhouse (21);
a sled (70) pivotally mounted above said aperture (26) and above said predetermined path (31); and
linkage means (65, 71-74) connecting said door (60) and said sled (70) for pivoting said sled in the direction of said aperture (26) as said door is rotated to uncover said aperture.

10. An agricultural harvesting machine according to claim 9, **characterized in that**:
said door (60) is attached to said feederhouse (21) by door hinge (61) and said sled (70) is attached to said feederhouse by a sled hinge (73); and
said linkage means comprise:
- a sled link (65) affixed to said door hinge (61);
- a sled linkage (71) pivotally attached to said sled link (65), said linkage having a linkage slot (72);
- a sled hinge link (74) affixed to said sled hinge (73) and slideably attached to said sled linkage (71) by the linkage slot (72).

11. An agricultural harvesting machine according to claim 9 or 10, when appended to claim 3, **characterized in that** said sled (70) is mounted above said lower apron (23b) to contact said lower apron (23b) when pivoted downwards in conjunction with said door (60).

12. An agricultural harvesting machine according to any of the claims 9 to 11, **characterized in that** said ejection system further comprises:
a latch (75) positioned on the feederhouse (21) or on the door (60) and cooperating with a latch catch (66) on said door (60) or on said feederhouse (21), respectively, for holding said door in a closed position, aligned with a floor portion (25a) of said feederhouse;
an actuator (77) for removing said latch (75) from said latch catch (66), thereby releasing said door (60) to discharge the foreign objects (30); and
a controller (80) connected to said first impact sensing array (40) and said second impact sensing array (50) and operable to operate said actuator to release said door (60) when foreign objects (30) are detected by the one or other array.

## Patentansprüche

1. Landwirtschaftliche Erntemaschine (1) mit:
einem mit Räder versehenen Hauptrahmen (68);
einem Erntematerial-Verarbeitungssystem (3, 4), das an dem Hauptrahmen befestigt ist, um von der Maschine geerntetes Erntematerial zu verarbeiten; und
einem Zuführungsgehäuse (21), das an dem Hauptrahmen (68) zur Zuführung des Erntematerials an das Erntematerial-Verarbeitungssystem (3, 4) befestigt ist;
wobei das Zuführungsgehäuse (21) folgendes umfaßt:
- eine Fördereinrichtung (23) zum Fördern des Erntematerials entlang einer vorgegebenen Bahn (31) an das Erntematerial-Verarbeitungssystem (3, 4) und
- eine Detektoranordnung (35) zur Detektion von Fremdkörpern (30) in dem Erntematerial, wobei die Anordnung (35) eine erste Aufprall-Sensoranordnung (40) benachbart zu der vorgegebenen Bahn (31) einschließt, die zur Feststellung eines Aufpralls der Fremdkörper betreibbar ist;
**dadurch gekennzeichnet, daß** die Detektoranordnung weiterhin eine zweite Aufprall-Sensoranordnung (50) entfernt von der ersten Aufprall-Sensoranordnung (40) und benachbart zu der vorgegebenen Bahn (31) umfaßt, die zur Feststellung eines Aufpralls der Fremdkörper (30) betreibbar ist.

2. Landwirtschaftliche Erntemaschine nach Anspruch 1, **dadurch gekennzeichnet, daß** die erste Sensoranordnung (40) unterhalb der vorgegebenen Bahn (31) angeordnet ist, und daß die zweite Sensoranordnung (50) oberhalb der vorgegebenen Bahn angeordnet ist.

3. Landwirtschaftliche Erntemaschine nach Anspruch 1 oder 2, **dadurch gekennzeichnet, daß**:
die Fördereinrichtungen eine vordere Trommel (22) und eine hintere Trommel (24), die drehbar an einer Wand oder Wänden (25) des Zuführungsgehäuses (21) befestigt sind, und eine Förderkette (23) umfassen, die die vordere Trommel (23) und die hintere Trommel (24) umgibt und einen oberen Strang (23a) und einen unteren Strang (23b) aufweist, und
die zweite Sensoranordnung (50) in einer Befestigungszone (23c) zwischen dem oberen Strang (23a) und dem unteren Strang (23b) angeordnet ist.

4. Landwirtschaftliche Erntemaschine nach Anspruch 3, **dadurch gekennzeichnet, daß**:
die vordere Trommel (24) drehbar an der Wand oder den Wänden (25) mit Hilfe eines schwenkbaren Trommelarms (27) befestigt ist; und
die zweite Sensoranordnung (50) an dem schwenkbaren Trommelarm (27) eingebracht ist.

5. Landwirtschaftliche Erntemaschine nach Anspruch 4, **dadurch gekennzeichnet, daß** der schwenkbare Trommelarm (27) mit einer Rolle (53) versehen ist, die eine Berührung der zweiten Sensoranordnung (50) durch die Förderkette (23) verhindert.

6. Landwirtschaftliche Emtemaschine nach einem der vorhergehenden Ansprüche, **dadurch gekennzeichnet, daß** die zweite Sensoranordnung einen Kanal (51) benachbart zu der vorgegebenen Bahn (31), eine auf dem Kanal (51) aufgebrachte Kanalisolation (52) und zumindest einen Aufprallsensor (55) umfaßt.

7. Landwirtschaftliche Erntemaschine nach einem der vorhergehenden Ansprüche, **dadurch gekennzeichnet, daß**:
die vorgegebene Bahn (31) sich entlang eines Bodens (25a) des Zuführungsgehäuses (21) erstreckt; und
die erste Sensoranordnung folgendes umfaßt:
- eine Klangplatte (42), die in Ausrichtung mit dem Boden (25a) angeordnet ist;
- eine auf die Klangplatte (42) zwischen der Klangplatte und dem Boden aufgebrachte Isolation (43);
- eine Plattenhalterung (45), die an dem Zuführungsgehäuse (21) zur Halterung der Klangplatte (42) angebracht ist, wobei die Halterung eine U-förmige Kanalisolation (47) aufweist; und
- zumindest einen Aufprallsensor (41).

8. Landwirtschaftliche Erntemaschine nach einem der vorhergehenden Ansprüche, **dadurch gekennzeichnet, daß** die erste Sensoranordnung und/oder die zweite Sensoranordnung einen Aufprallsensor (41/55) umfassen, der zur Messung mechanischer Schwingungen oder Geräusche betreibbar ist, die durch den Aufprall der Fremdkörper (30) hervorgerufen werden.

9. Landwirtschaftliche Erntemaschine nach einem der vorhergehenden Ansprüche, **dadurch gekennzeichnet, daß** das Zuführungsgehäuse (21) ein Auswurfsystem für die Fremdkörper (30) aufweist, wobei das Auswurfsystem folgendes umfaßt:
eine Öffnung (26) in dem Zuführungsgehäuse (21) unterhalb der vorgegebenen Erntematerial-Bahn (31);
eine Klappe (60), die schwenkbar an dem Zuführungsgehäuse (21) befestigt ist und die Öffnung (26) abdeckt, wobei die Klappe drehbar ist um die Öffnung (26) freizugeben und die Fremdkörper aus dem Zuführungsgehäuse (21) abzugeben;
einen Schlitten (70), der schwenkbar oberhalb der Öffnung (26) und über der vorgegebenen Bahn (31') angeordnet ist; und
Gestängeeinrichtungen (65, 71-74), die die Klappe (60) und den Schlitten (70) verbinden, um den Schlitten in Richtung auf die Öffnung (26) zu verschwenken, wenn die Klappe gedreht wird, um die Öffnung freizugeben.

10. Landwirtschaftliche Erntemaschine nach Anspruch 9, **dadurch gekennzeichnet, daß**:
die Klappe (60) an dem Zuführungsgehäuse (21) über ein Klappenscharnier (61) befestigt ist und der Schlitten (70) an dem Zuführungsgehäuse über einem Schlittenscharnier (73) befestigt ist; und
die Gestängeeinrichtungen folgendes umfassen:
- einen Schlittenhebel (65), der an dem Türscharnier (61) befestigt ist
- ein Schlittengestänge (71), das schwenkbar an dem Schlittenhebel (65) befestigt ist, wobei das Gestänge einen Gestängeschlitz (72) aufweist;
- ein Schlittenschamiergestänge (74), das an dem Schlittenscharnier (73) befestigt ist und verschiebbar an dem Schlittengestänge (71) über den Gestängeschlitz (72) angebracht ist.

11. Landwirtschaftliche Erntemaschine nach Anspruch 9 oder 10 unter Rückbeziehung auf Anspruch 3, **dadurch gekennzeichnet, daß** der Schlitten (70) oberhalb des unteren Stranges (23b) befestigt ist, um mit dem unteren Strang (23b) in Berührung zu kommen, wenn er zusammen mit der Klappe (60) nach unten verschwenkt wird.

12. Landwirtschaftliche Erntemaschine nach einem der Ansprüche 9 bis 11, **dadurch gekennzeichnet, daß** das Auswurfsystem weiterhin folgendes umfaßt:
einen Riegel (75), der an dem Zuführungsgehäuse (21) oder der Klappe (60) angeordnet ist und mit einer Riegelklinke (66) auf der Klappe (60) bzw. dem Zuführungsgehäuse (21) zusammenwirkt, um die Klappe in einer geschlossenen Stellung unter Ausrichtung mit einem Bodenabschnitt (25a) des Zuführungsgehäuses zu halten;
eine Betätigungseinrichtung (77) zum Entfernen des Riegels (75) aus der Riegelklinke (66), wodurch die Klappe (60) freigegeben wird, um die Fremdkörper (30) auszuwerfen; und
ein Steuergerät (80), das mit der ersten Aufprall-Sensoranordnung (40) und der zweiten Aufprall-Sensoranordnung (50) verbunden und betreibbar ist, um die Betätigungseinrichtung zu betätigen, um die Klappe (60) freizugeben, wenn Fremdkörper (30) durch die eine oder andere Anordnung erfaßt werden.

## Revendications

1. Récolteuse agricole (1) comprenant:
un châssis principal sur roues (68);
un système de traitement de matériau de récolte (3,4) monté sur ledit châssis principal pour traiter le tapis de matériau de récolte moissonné par ladite machine; et
un logement d'alimentation (21) monté sur ledit châssis principal (68) pour alimenter ledit tapis de matériau de récolte dans ledit système de traitement de matériau de récolte (3, 4);
ledit logement (21) d'alimentation comportant:
- un moyen de convoyeur (23) pour transporter ledit tapis de matériau de récolte le long d'un trajet prédéterminé (31) vers ledit système de traitement de matériau de récolte (3, 4); et
- un ensemble de détecteur (35) pour détecter les objets étrangers (30) dans ledit tapis de matériau de récolte, ledit ensemble (35) comprenant un premier groupe de détection d'impact (40), adjacent audit trajet prédéterminé (31) et dont la fonction est de détecter des impacts par lesdits objets étrangers;
**caractérisée en ce que** ledit ensemble de détecteur comporte en outre un second groupe de détection d'impact (50) éloigné dudit premier groupe de détection (40) d'impact et adjacent audit trajet prédéterminé (31), et dont la fonction est de détecter des impacts par lesdits objets étrangers (30).

2. Récolteuse agricole selon la revendication 1, **caractérisée en ce que** ledit premier groupe de détection (40) est positionné sous ledit trajet prédéterminé (31) et ledit second groupe de détection (50) est positionné au-dessus dudit trajet prédéterminé.

3. Récolteuse agricole selon la revendication 1 ou 2, **caractérisée en ce que**:
ledit moyen de convoyeur comprend un tambour avant (22) et un tambour arrière (24), fixés rotativement à une ou des paroi(s) (25) dudit logement d'alimentation (21), et une chaîne transporteuse (23) encerclant ledit tambour avant (22) et ledit tambour arrière (24) et possédant un brin supérieur (23a) et un brin inférieur (23b); et
ledit second groupe de détection (50) est positionné dans une zone de montage (23c) entre ledit brin supérieur (23a) et ledit brin inférieur (23b).

4. Récolteuse agricole selon la revendication 3, **caractérisée en ce que**:
ledit tambour avant (24) est fixé rotativement à une ou des paroi(s) (25) au moyen d'un bras de tambour (27) pivotant; et
ledit second groupe de détection (50) est fixé audit bras de tambour (27) pivotant.

5. Récolteuse agricole selon la revendication 4, **caractérisée en ce que** ledit bras de tambour (27) pivotant est pourvu d'un cylindre (53) évitant le contact de ladite chaîne transporteuse (23) avec ledit second groupe de détection (50).

6. Récolteuse agricole selon l'une quelconque des revendications précédentes, **caractérisée en ce que** ledit second groupe de détection comprend un canal (51) adjacent audit trajet prédéterminé (31), une isolation de canal (52) appliquée sur ledit canal (51) et au moins un détecteur d'impact (55).

7. Récolteuse agricole selon l'une quelconque des revendications précédentes, **caractérisée en ce que**:
ledit trajet prédéterminé (31) s'étend le long d'un plancher (25a) dudit logement d'alimentation (21); et
ledit premier groupe de détection comporte:
- une plaque de résonance (42) positionnée en alignement avec ledit plancher (25a);
- une isolation (43) appliquée sur ladite plaque de résonance (42) entre ladite plaque de résonance et ledit plancher;
- un support de plaque (45) fixé audit logement d'alimentation (21) pour supporter ladite plaque de résonance (42), le support possédant une isolation de canal en forme de "U" (47); et
- au moins un détecteur d'impact (41).

8. Récolteuse agricole selon l'une quelconque des revendications précédentes, **caractérisée en ce que** ledit premier groupe de détection et/ou ledit second groupe de détection comprend un détecteur d'impact (41/55) dont la fonction est de détecter des vibrations mécaniques ou des sons provoqué(e)s par l'impact desdits objets étrangers (30).

9. Récolteuse agricole selon l'une quelconque des revendications précédentes, **caractérisée en ce que** ledit logement d'alimentation (21) possède un système d'éjection pour lesdits objets étrangers (30), ledit système d'éjection comportant:
une ouverture (26) dans ledit logement d'alimentation (21) en dessous dudit trajet prédéterminé du matériau de récolte (31);
une trappe (60) fixée avec pivotement audit logement d'alimentation (21) et couvrant ladite ouverture (26), ladite trappe étant capable de pivoter afin de découvrir ladite ouverture (26) et de décharger lesdits objets étrangers hors dudit logement d'alimentation (21);
un traîneau (70) monté avec pivotement au-dessus de ladite ouverture (26) et au-dessus dudit trajet prédéterminé (31); et
des moyens de liaison (65, 71-74) raccordant ladite trappe (60) et ledit traîneau (70) pour faire pivoter ledit traîneau dans la direction de ladite ouverture (26) lorsque ladite trappe est pivotée pour découvrir ladite ouverture.

10. Récolteuse agricole selon la revendication 9, **caractérisée en ce que**:
ladite trappe (60) est fixée audit logement d'alimentation (21) par une charnière de trappe (61) et ledit traîneau (70) est fixé audit logement d'alimentation par une charnière de traîneau (73); et
lesdits moyens de liaison comprennent:
- une jonction de traîneau (65) fixée à ladite charnière de trappe (61);
- une liaison de traîneau (71) reliée avec pivotement à ladite jonction de traîneau (65), ladite liaison possédant une boutonnière de liaison (72);
- une jonction de charnière de traîneau (74) fixée à ladite charnière de traîneau (73) et reliée avec coulissement à ladite jonction de traîneau (71) par la boutonnière de liaison (72).

11. Récolteuse agricole selon la revendication 9 ou 10, lorsqu'elle est se rapporte à la revendication 3, **caractérisée en ce que** ledit traîneau (70) est monté au-dessus dudit brin inférieur (23b) pour toucher ledit brin inférieur (23b) lorsqu'il est pivoté vers le bas en conjonction avec ladite trappe (60).

12. Récolteuse agricole selon l'une quelconque des revendications 9 à 11, **caractérisée en ce que** ledit système d'éjection comporte en outre:
un loquet (75) positionné sur le logement d'alimentation (21) ou sur la trappe (60) et coopérant avec un cliquet de loquet (66) sur ladite trappe (60) ou sur ledit logement d'alimentation (21), respectivement, pour garder ladite trappe en position fermée, en alignement avec une portion de plancher (25a) dudit logement d'alimentation;
un actionneur (77) destiné à retirer ledit loquet (75) hors dudit cliquet de loquet (66), de manière à dégager ladite trappe (60) pour décharger les objets étrangers (30); et
un contrôleur (80) raccordé audit premier groupe de détection d'impact (40) et audit second groupe de détection d'impact (50) et dont la fonction est d'activer ledit actionneur pour ouvrir ladite trappe (60) en cas de détection d'objets étrangers (30) par l'un ou l'autre système.
